(19) Europäisches Patentamt
European Patent Office
Office européen des brevets

(11) **EP 2 862 666 B1**

(12) # EUROPÄISCHE PATENTSCHRIFT

(45) Veröffentlichungstag und Bekanntmachung des Hinweises auf die Patenterteilung:
**20.02.2019 Patentblatt 2019/08**

(21) Anmeldenummer: **14003543.7**

(22) Anmeldetag: **16.10.2014**

(51) Int Cl.:
**B23K 35/00** (2006.01)        **C22C 38/58** (2006.01)
**C22C 38/44** (2006.01)        **C22C 19/05** (2006.01)
**C22C 38/00** (2006.01)        **B23K 35/30** (2006.01)
**C21D 9/50** (2006.01)          **C21D 6/00** (2006.01)
**B23K 35/22** (2006.01)        **B23K 103/04** (2006.01)

(54) **VERFAHREN ZUM SCHWEISSEN VON UNS S20910 UNTER VERWENDUNG EINES SCHWEISSZUSATZES DER KOMBINATION VON 51 MASSEN% 1.4452 UND 49 MASSEN% 2.4659.**

METHOD OF WELDING UNS S20910 USING A WELDING FILLER OF THE COMBINATION OF 51 MASS% 1.4452 AND 49 MASS% 2.4659.

MÉTHODE DE SOUDAGE DE UNS S20910 EN UTILISANT UNE CHARGE DE SOUDAGE DE LA COMBINAISON DE 51 % EN MASSE 1.4452 ET 49 % EN MASSE 2.4659.

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.10.2013 DE 102013017406**

(43) Veröffentlichungstag der Anmeldung:
**22.04.2015 Patentblatt 2015/17**

(73) Patentinhaber: **MT Aerospace AG**
**86153 Augsburg (DE)**

(72) Erfinder: **Radtke, Wulf**
**82152 Planegg (DE)**

(74) Vertreter: **Grape & Schwarzensteiner**
**Patentanwälte**
**Sebastiansplatz 7**
**80331 München (DE)**

(56) Entgegenhaltungen:
WO-A1-00/43562          AT-B- 329 345
CN-A- 102 962 602      DE-A1- 4 110 695
DE-A1- 19 908 034      US-A- 3 854 938
US-A- 5 474 737          US-A- 5 739 503

- **GAVRILJUK V G ET AL: "Chapter 4.3 Welding (pages)", 1. Januar 1999 (1999-01-01), HIGH NITROGEN STEELS : STRUCTURE, PROPERTIES, MANUFACTURE, APPLICATIONS / VALENTIN G. GAVRILJUK; HANS BERNS, BERLIN [U.A.] : SPRINGER, 1999, DE, PAGE(S) 225 - 226, XP008178160, ISBN: 978-3-540-66411-6 * Seite 225 - Seite 226 ***
- **JAE HONG SHIN ET AL: "Solubility of Nitrogen in High Manganese Steel (HMnS) Melts: Interaction Parameter between Mn and N", METALLURGICAL AND MATERIALS TRANSACTIONS B, SPRINGER-VERLAG, NEW YORK, Bd. 42, Nr. 6, 4. Oktober 2011 (2011-10-04), Seiten 1081-1085, XP019979485, ISSN: 1543-1916, DOI: 10.1007/S11663-011-9582-6**

**EP 2 862 666 B1**

**Beschreibung**

Die Erfindung betrifft ein Verfahren zum Schweißen eines Grundwerkstoffs aus dem vollaustenitischen, Stickstoff-legierten Chrom-Nickel-Stahl UNS S20910 mit Hilfe eines speziellen Schweißzusatzes, den Schweißzusatz und die Verwendung des Verfahrens zur Herstellung von insbesondere zur Speicherung von Hochdruck-Flüssigwasserstoff geeigneten Tanks, respektive Behältern.

Für die Speicherung von Hochdruck-Flüssigwasserstoff in vorzugsweise mobilen Leichtbau-Behältern werden aus Gründen der Minimierung der Behältermasse mit Hochleistungsfasern vollarmierte Liner aus Chrom-Nickel-Stahl verwendet. Das EinsatzSpektrum dieser Behälter reicht von der Temperatur flüssigen Wasserstoffs (- 253 °C) bis in den hohen Umgebungstemperaturbereich. Beim Aushärten des Harzes sowie beim Ausheizen der Faserverbundhülle, um durch Ausgasung angemessene Qualität des wärmeisolierenden Vakuums in der Umgebung des Behälters sicherzustellen, können Temperaturen von bis zu 120 °C erreicht werden.

Die Temperatur flüssigen Wasserstoffs, wie sie beim Betanken auftreten kann, wird in zyklischer Betriebsweise von höheren Temperaturen abgelöst, wie sie beim bestimmungsgemäßen Betrieb sowie beim vollständigen Entleeren des Tanks oder in der Betriebsart "Hochdruck-Wasserstoff-Gas-Speicherung" vorkommen. Überlagert werden diese Temperaturzyklen von Druckzyklen, die vom höchsten Druck nach dem Betanken (≥ 350 bar) bis zum Druckausgleich mit der Umgebung reichen.

Für einen Verbundtank der beschriebenen Art sind besonders kritische Betriebsfälle demnach ein hoher Druck bei tiefer Temperatur und kein Druck bei hoher Temperatur.

Der erste Fall ist kritisch, weil die Abkühlung des Tanks zur thermisch bedingten Kontraktion des Liners, bei Verwendung von Kohlenstofffasern aber nicht zu einer entsprechenden Verkleinerung der Verbundhülle führt. Dadurch besteht insbesondere die Gefahr, dass ein zylindrischer Liner im Bereich seiner Dome die Unterstützung der Verbundhülle verliert und somit den gesamten Druck alleine abfangen muss. Die mehrachsige Membranspannung in diesem Bereich hat zusätzlichen negativen Einfluss, da dies verringernd auf die Duktilität des Linerwerkstoffs wirkt.

Der zweite Fall ist kritisch, weil sich ein unter Druckvorspannung stehender Liner gegen den Widerstand der Verbundhülle ausdehnt und die Gefahr besteht, dass er nach innen, also von der Verbundhülle weg beult.

Beide Fälle sind erst recht in ihrem Wechselspiel kritisch, da sie im Liner zyklische Ermüdung im Kurzzeitbereich (= low cycle fatigue) induzieren.

Aus den genannten Gründen scheint es unabdingbar, dass die Werkstoffeigenschaften des Liners hinsichtlich Grundwerkstoff, Wärmeeinflusszone (WEZ) und Schweißgut auf möglichst gleiches Niveau gebracht werden. Andernfalls besteht die Gefahr, dass weichere Bereiche, und das betrifft meist die Schweißnähte bzw. die WEZ, früher als der Grundwerkstoff in den plastischen Bereich geraten und mithin, ganz zu schweigen von einschlägiger zusätzlicher Erschwernis durch negativ wirkende Schweißnahteigenheiten wie Grobkorn, Seigerungen, Porosität, geringere Duktilität und Zähigkeit etc., in den Kurzzeit-Ermüdungsbereich kommen und vorzeitig versagen.

In der Absicht, den Behälter so leicht wie möglich zu machen, wird das System aus Liner und Verbundhülle nach dessen Aushärten vorgespannt. Bei diesem Prozess der Autofrettage wird der Liner durch entsprechenden Innendruck plastisch vergrößert und somit nach Wegnahme des Vorspanndrucks von der dann unter Zugspannung stehenden Verbundhülle unter Druckspannung gesetzt, wobei es sich dabei um Membranspannungen handelt. Damit wird dem zügig-elastischen Bereich des Liners ein kompressivelastischer Anteil nach Hooke hinzugefügt. Der Liner kann so eine größere elastische Dehnung ertragen. Bei dieser Betrachtung ist also beabsichtigt, dass der Liner den Betriebszyklen innerhalb der Spanne des elastischen Bereichs widersteht und nicht etwa in den Bereich der Kurzzeit-Ermüdung gerät.

Der Vorgang des Vorspannens erfordert eine möglichst homogene Dehnung des Liners unter der Wirkung des Vorspanndrucks. Wiederum unterliegen die Schweißnähte und deren WEZ besonderer Beachtung, da sie im Verhältnis zum Grundwerkstoff auch hier möglichst nicht vorzeitig plastifizieren oder gar versagen dürfen.

Wie bereits erläutert, ist ein möglichst hoher elastischer Bereich des Liners von großem Interesse. Vollaustenitische Chrom-Nickel-Stähle bieten als solche in dieser Hinsicht, etwa im Vergleich zu Aluminiumlegierungen, keine ausreichenden Perspektiven. Eine mögliche Lösung ist die Kaltverfestigung des vollaustenitischen Werkstoffs. Dabei wird der geschweißte Liner ohne Verbund mittels Innendruck plastisch um etwa 10 bis 20 % gereckt, um damit die gewünschte Steigerung der Streckgrenze herbeizuführen. Hierbei ist es unabdingbar, dass die Schweißnähte nicht vorzeitig plastifizieren, da sonst der gewünschte Reckgrad nicht homogen über der Linerfläche verteilt wird, sondern lokalisiert und somit die Schweißnähte zu vorzeitigem Versagen treibt.

Zusammenfassend ist zu sagen, dass die mechanischen Eigenschaften der Schweißnähte und der WEZ gleich oder besser als die des Liner-Grundwerkstoffs sein sollten, um dem Kaltverfestigen des Liners durch Recken, dem Vorspannen des Behälters und den thermischen und Druckzyklen im Tankbetrieb widerstehen zu können.

Zwei Elemente der Umgebungsbedingungen des oben erläuterten Behälters, nämlich sehr tiefe, kryogene Temperatur und Hochdruckwasserstoff, werden in der Technik als extrem versprödend kategorisiert. Bei den Stählen werden ausschließlich austenitische Legierungen als prinzipiell geeignet eingestuft. Dabei muss der austenitische Zustand auch unter einer diesbezüglich sehr ungünstigen Kombination von plastischer Verformung und kryogener Temperatur, die sich etwa bei lokaler Überlast im Betrieb einstellen kann, erhalten bleiben. Um dies zu gewährleisten, wird häufig ein Mindest-Nickelgehalt von 13 % gefordert. Höhere Nickelgehalte werden wegen der Legierungskosten andererseits nur in Grenzen akzeptiert. Darüber hinaus wird zur Sicherheit auf ausscheidungshärtende Effekte verzichtet, die, sobald sie sich als ungünstige Korngrenzenbelegung darstellen und davon muss von Ausnahmen abgesehen ausgegangen werden, unter den vorherrschenden Umgebungsbedingungen ebenfalls versprödend wirken.

Diese Vorgaben sind jedoch gleichbedeutend damit, dass man mit vollaustenitischen Legierungen mit $\geq$ 13 % Ni ohne Ausscheidungshärtung nur äußerst geringe Streckgrenzen in der Größenordnung von $R_{p0,2}$ = 200 MPa erreichen kann, die zu exzessiv schweren Behältern durch den dann erforderlichen dicken Faserverbund führen würden. Das Legieren mit Stickstoff verbessert die Situation, reicht aber eindeutig mit einer erreichbaren Streckgrenze in der Größenordnung von $R_{p0,2}$ = 400 bis 500 MPa nicht aus. Aus diesem Grund wird u.a. vorgeschlagen, den Werkstoff zur zumindest weiterer Verdoppelung der Streckgrenze kaltzurecken.

Um das skizzierte Ziel möglichst hoher Streckgrenze durch Kaltverfestigung zu erreichen, ist es ratsam, von einem möglichst hohen Streckgrenzenniveau bereits vor der Kaltverfestigung auszugehen, was nur mit Stickstoff-haltigen Legierungen geschehen kann. Stickstoff bietet darüber hinaus den Vorteil, die an sich schon hohe Kaltverfestigungsneigung der austenitischen Stähle erheblich anzuheben. Aus beidem folgt, dass der zum Erreichen eines bestimmten Streckgrenzenniveaus erforderliche Umformgrad ein Minimum annimmt. Das ist generell wünschenswert, da mit zunehmendem Umformgrad jede Form von Inhomogenität der Streckgrenze, aber auch Werkstofffehler aller Art, umso versagenskritischer werden.

Das Schweißen Stickstoff-haltiger Legierungen ist jedoch mit Schwierigkeiten verbunden. Stickstoff entwickelt einen hohen Dampfdruck, ebenso wie Mangan, das diesen Legierungen zur Steigerung der Löslichkeit für Stickstoff bzw. wegen seiner den Austenit stabilisierenden Wirkung zugegeben wird. Das bedeutet, dass beim Schweißen mit Abdampfung beider Legierungselemente aus der Schmelze zu rechnen ist. Das geht zwangsläufig mit einer Verminderung der Streckgrenze und der Kaltverfestigungsneigung im Schweißgut bzw. der Schweißnaht einher und ist somit nicht tolerabel.

Molybdän beeinflusst, ähnlich wie Mangan (und Chrom), die Löslichkeit von Stickstoff in Legierungen positiv. Der Schweißvorgang führt zu Molybdän-Seigerungen, was ebenfalls die Streckgrenze mindern kann. Daneben ist mit weiteren negativen Effekten des Schweißens zu rechnen, die ebenfalls die Eigenschaften des Schweißbereichs bzw. Schweißguts ungünstig beeinflussen, wie etwa Grobkorn- und Rissbildung, Porosität, Kerbwirkung etc.

Gavriljuk et al. beschreiben in Chapter 4.3 Welding (pages), 1. Januar 1999, "High Nitrogen Steels, Structure, Properties, Manufacture, Applications": Springer 1999, Seiten 225-226, dass der Verlust an Stickstoff beim Schweißen durch eine Modifikation des Schweißzusatzes korrigiert wird.

Die US 3,854,938 beschreibt einen als Schweißzusatz geeigneten Stickstoff-legierten austenitischen Stahl, bei dem ein Mangan/Stickstoff-Verältnis bei 42 liegen soll, um Schweißverluste zu vermeiden.

Wesentliche Aufgabe der vorliegenden Erfindung ist es daher, beim Schweißen von vollaustenitischen, N-haltigen Chrom-Nickel-Stählen das Abdampfen von Mangan und Stickstoff während des Schweißvorgangs zu vermeiden oder wenigstens in erheblichem Maße zu vermindern. Auch die Molybdänseigerung sollte gegebenenfalls vermieden oder in erheblichem Maß vermindert werden. Im Ergebnis sollten das Streckgrenzenniveau und die Kaltverfestigungsneigung in der Schweißnaht (im Schweißgut) zumindest gleich gut, bevorzugt besser als im Grundwerkstoff sein.

Ein Lösungsansatz für die vorgenannten Probleme wird erfindungsgemäß im Zuführen der Elemente $N_2$ und Mn, beispielsweise mithilfe eines Schweißzusatzes, gesehen.

Gegenstand der vorliegenden Erfindung ist somit unter einem ersten Aspekt ein Verfahren zum Schweißen eines Grundwerkstoffs aus einem vollaustenitischen, Stickstoff-legierten Chrom-Nickel-Stahl, vorzugsweise mit einem Nickelgehalt von $\geq$ 13%, nämlich UNS S20910, unter Verwendung eines Schweißzusatzes, wobei die Zusammensetzung des Schweißzusatzes um so viel mehr Stickstoff ($N_2$) und Mangan (Mn) enthält, dass nach dem Schweißen und das dadurch bedingte Abdampfen von Stickstoff ($N_2$) und Mangan (Mn) im Schweißgut zumindest so viel Stickstoff ($N_2$) und Mangan (Mn) enthalten bleibt wie im Grundwerkstoff vorhanden ist, wobei der Schweißzusatz eine Kombination aus 51% 1.4452 und 49% 2.4659 ist.

Durch die Maßnahme, dass dem Schweißzusatz so viel $N_2$ und/oder Mn zugeführt wird, dass die Konzentration dieser Elemente nach dem Schweißen im Schweißgut mindestens genauso hoch ist wie im Grundwerkstoff, konnte erreicht werden, dass das Streckgrenzenniveau und die Kaltverfestigungsneigung in der Schweißnaht, also im Schweißgut, zumindest gleich gut wie oder sogar besser ist als im Grundwerkstoff. Durch diese Maßnahme lässt sich, mit anderen Worten, die Streckgrenze im Schweißgut so beeinflussen, dass sie nicht als Ausgangspunkt eines Versagens beim Zugversuch wirkt. Die chemische Zusammensetzung des Schweißguts wird derart modifiziert, dass im Zugversuch quer zur Schweißnaht, die bleibende, d.h. plastische Querschnittsverminderung hinter der des Grundwerkstoffs zurückbleibt und das Versagen allenfalls in den Grundwerkstoff verlagert wird.

Bevorzugte Merkmale des erfindungsgemäßen Verfahrens ergeben sich aus den Unteransprüchen 2 bis 8.

Die Zusammensetzung des Schweißzusatzes ist dabei so auf die Zusammensetzung des Grundwerkstoffs abgestimmt, dass die Elemente $N_2$ und Mn in einer Menge enthalten sind, die im erzeugten Schweißgut eine Konzentration davon liefert, die größer als ihre Konzentration im Grundwerkstoff ist. Eine Überkompensierung der Abdampfverluste wird erreicht. Streckgrenze und Kaltverfestigungsvermögen sind im erzeugten Schweißgut besser als im Grundwerkstoff. Der Schweißzusatz ist auch so auf die Zusammensetzung des Grundwerkstoffs abgestimmt, dass die Zufuhr des Elements Molybdän (Mo) in einer Menge erfolgt, die im erzeugten Schweißgut eine Konzentration davon liefert, die mindestens gleich ihrer Konzentration im Grundwerkstoff ist. Da Molybdän die Löslichkeit von $N_2$ in einer Legierung erhöht, wird damit erreicht, dass nicht nur das durch das Schweißen bedingte Seigern kompensiert wird, sondern auch die Löslichkeit von $N_2$ gefördert wird.

Der Schweißzusatz ist so auf die Zusammensetzung des Grundwerkstoffs abgestimmt, dass die Zufuhr des Elements Molybdän (Mo) in einer Menge erfolgt, die im erzeugten Schweißgut eine Konzentration davon liefert, die größer als ihre Konzentration im Grundwerkstoff ist. Damit werden die negativen Wirkungen des Seigerns sogar überkompensiert.

Vorzugsweise werden zwei Drähte von zueinander verschiedenen handelsüblichen Schweißzusätzen verwendet und diese zwei Drähte werden mit einem einzigen Drahtvorschubgerät zugeführt.

Ebenfalls bevorzugt können die zwei Drähte unterschiedlicher Schweißzusätze mit unterschiedlicher Vorchubgeschwindigkeit zugeführt werden, um so die aggregierte chemische Zusammensetzung des zugesetzten Schweißzusatzes und damit die Eigenschaften des Schweißguts variabel gestalten zu können. Andererseits können die Eigenschaften des Schweißguts auch durch die Verwendung von Drähten unterschiedlicher Durchmesser eingestellt werden.

Im Rahmen der vorliegenden Erfindung wird ein vollaustenitischer, Stickstoff-legierter Chrom-Nickel-Stahl mit einem Nickelgehalt von größer als 13% verarbeitet, nämlich UNS S20910, gleich Nitronic 50 verarbeitet.

Diese Materialien sind insbesondere den Anforderungen an einen Tank/Behälter zur Speicherung/Lagerung von Hochdruck-Flüssigwasserstoff gewachsen.

Der Schweißzusatz ist hinsichtlich der resultierenden Zusammensetzung eine Kombination aus 51% P 2000 und 49% SG-NiCr30Mo5W. Diese Mischung ist an den Grundwerkstoff Nitronic 50 so angepasst, dass Abdampfungs-und Seigerungsverluste (über)kompensiert werden.

Im Rahmen der vorliegenden Erfindung kann das zur Anwendung kommende Schweißverfahren aus WIG-Schweißen, EB-Schweißen, Reibschweißen, Lichtbogenschweißen oder Laserschweißen ausgewählt werden. Das Schweißverfahren hat bedingt durch seinen Energieeintrag Einfluss auf die Menge an $N_2$, Mn und/oder Mo, die im Schweißzusatz enthalten sein muss, um ein Abdampfen/Seigern zu vermeiden bzw. zu vermindern.

In einer weiteren bevorzugten Ausführungsform werden beim Schweißen dem Schutzgas 1 bis 2 % Stickstoff zugesetzt, um dem Abdampfen von Stickstoff zusätzlich mit einem hohen Stickstoffpartialdruck entgegenzuwirken. Aus dem gleichen Grund kann an der Wurzelseite mit Stickstoff formiert werden.

Die oben als bevorzugt angegebenen Merkmale werden durch die nachfolgenden Erläuterungen untermauert.

Gegenstand der Erfindung ist gleichermaßen ein Schweißzusatz, wie er in den Ansprüchen 7 definiert ist, bestehend aus einer Kombination aus 51% P2000 (1.4452) und 49% SG-NiCr30Mo5W (2.4659). Ein Schweißverfahren, das unter Verwendung dieses Schweißzusatzes durchgeführt wird, lässt sich erfindungsgemäß zur Herstellung von zur Speicherung von Hochdruck-Flüssigwasserstoff geeigneten Tanks bzw. Behältern verwenden.

Definition des Grundwerkstoffs

Im Hinblick auf die Zielsetzung der Herstellung von zur Speicherung von Hochdruck-Flüssigwasserstoff geeigneten Tanks, respektive Behältern ist die Auswahl des Grundwerkstoffs für einen Liner relevant. Besonders zu berücksichtigen ist ein hoher Wasserstoff-Gasdruck von bis zu 350 bar sowie eine minimale Einsatztemperatur von ca. 30 K.

Die Forderung nach Austenitstabilität bis zu sehr tiefen Temperaturen, die auch bei überlagerter plastischer Verformung erhalten bleiben muss, ergibt sich aus der Versprödungsneigung z.B. ferritischer und martensitischer Strukturen im kryogenen Temperaturbereich sowie unter dem Einfluss von Hochdruck-Wasserstoff. Es werden daher Legierungen mit einem Nickelgehalt von etwa 13% in Betracht gezogen. Um eine adäquate Streckgrenze bzw. einen adäquaten elastischen Bereich einstellen zu können wird man Legierungen auswählen die einen hohen Stickstoff- und Mangangehalt aufweisen, welches die Löslichkeit von Stickstoff noch erhöht. Stickstoff-haltige Legierungen zeichnen sich zudem durch eine exzellente Kaltverfestigungsneigung aus. Um Gleichstand mit den Aluminium-Legierungen zu erreichen, sollte eine Kaltreckung bei Raumtemperatur um ca. 15% genügen. Auch ein erhöhter Molybdänwert ist zur Verbesserung der Stickstofflöslichkeit hilfreich.

Mit diesen Voraussetzungen sind die Grundwerkstoffe zur Herstellung der eingangs beschriebenen Tanks oder Behälter unter den Chrom-Nickelstählen zu suchen. Ein handelsüblicher Grundwerkstoff, der die vorgenannten Voraussetzungen und die Vorgabe einer zunächst ohne Kaltverfestigung erreichbaren Streckgrenze von 450 bis 500 MPa erfüllen kann, ist Nitronic 50, der auch unter den Bezeichnungen 22-13-5, XM-19, UNS S20910 bekannt ist. Nitronic 50 ist in Form von Blechen mit Wandstärken von bis zu 20 mm zur Herstellung beispielsweise des Tank-Zylinders als auch in Form von Rundbolzen zur Herstellung von Tank-Domen verfügbar. Gefügte Zylinder und Dome bilden demnach Liner für die vorher beschriebenen Tanks bzw. Behälter.

Lieferbare Halbzeuge von Nitronic 50 weisen folgende Eigenschaften auf:

| Halbzeug | Dimension | Lieferant | Normen | LösungsGlühen | Kennwerte (Vorgabe) | | |
|---|---|---|---|---|---|---|---|
| | | | | | $R_{p0,2}$ | $R_m$ | $A_{4d}$ |
| | | | | | MPa | MPa | % |
| Stabstahl | Ø 254 x 260 mm | AK Steel, Köln | ASTM A276, ASTM A 479 NACE MR-01-75 | 1070 °C, 5h, WQ | 481 (380) | 764 (690) | 46 |
| Blech | 1,6*) x 1143 x 3048 mm | Tennant | ASTM A240 | 1066 °C, 10' | 534 | 883 | 40 |
| *) Von 1.98 mm Dicke geschliffen, Schleifrichtung parallel zur Walzrichtung, Rauheit rms 63 = Ra 1,6 | | | | | | | |

| Halbzeug | C | Si | Mn | Cr | Mo | Ni | P | S | V | N | Nb | Ta |
|---|---|---|---|---|---|---|---|---|---|---|---|---|
| Stabstahl | 0,039 | 0,38 | 5,19 | 21,43 | 2,27 | 11,9 | 0,033 | 0,001 | 0,15 | 0,29 | 0,12 | 0,001 |
| Blech | 0,034 | 0,49 | 4,89 | 21,26 | 2,14 | 12,18 | 0,022 | 0,001 | 0,14 | 0,277 | 0,18 | - |

Der erwähnte Nickelgehalt von 13% wird zwar von Nitronic 50 nicht ganz erfüllt. Es zeigt sich jedoch, dass die chemische Zusammensetzung, mit spezieller Blickrichtung auf die den Austenit stabilisierende Wirkung der Elemente Mo, Mn und N, dieser Forderung mehr als entspricht.

Allgemeine Anforderungen an die Schweißnaht-Eigenschaften

Das Schweißen muss mit den bei der Fertigung von Hochdrucktank-Linern üblichen Verfahren problemlos möglich sein und zu fehlerfreien Nähten führen. Es sollen also möglichst keine Poren und Sprödphasen entstehen und ein kerbfreier Übergang vom Grundwerkstoff in den Schweißnahtquerschnitt gewährleistet werden. Streckgrenze und Zugfestigkeit der Schweißnaht sowie die Verfestigungsneigung des Schweißguts sollen mindestens so hoch liegen wie die entsprechenden Kennwerte des Grundwerkstoffs. Ein bleibendes Recken des Werkstoffs samt Schweißnaht mit bis zu ca. 15 % Reckgrad soll keinerlei Schäden hervorrufen, ebenso wie das nachfolgende Vorspannen des Tanks. Im Ergebnis sollen die Schweißnähte den thermisch und drucktechnisch zyklischen Betriebsbelastungen des Tanks möglichst in gleicher Weise wie der Grundwerkstoff widerstehen. Praktisch bedeutet dies, dass Zugproben, getestet quer zur Schweißnaht, im Schweißgut oder in den Fusionslinien möglichst nicht versagen sollen.

Stickstoff-legierte "hochfeste" vollaustenitische Stähle, wie Nitronic 50, enthalten demnach Stickstoff und Mangan, was die Löslichkeit für Stickstoff steigert. Beide Elemente haben einen hohen Dampfdruck und dampfen während des Schweißens umso stärker ab, je höher Temperatur und Dauer der Einwirkung hoher Temperaturen speziell in der Schmelze und je größer das Schmelzbad ist. Daraus folgt, dass nach Lichtbogen-Schweißen ohne Zusatz sowie mit artgleichem Zusatz nicht damit gerechnet werden kann, dass Streckgrenze und Verfestigungsneigung des Schweißguts an die entsprechenden Eigenschaften des Grundwerkstoffs heranreichen. Das im Schweißgut (und in der Wärmeeinflusszone) zu erwartende vergröberte Korn führt nach der Hall-Petch-Beziehung zu weiterer Minderung der Streckgrenze.

Handelsübliche Zusatzwerkstoffe (Schweißzusätze) lassen mangels eines ausreichenden Stickstoffgehalts keine Verbesserung erwarten. Es kommt hinzu, dass manche wichtige Legierungselemente, wie z.B. Molybdän, das u.a. ebenfalls zur Steigerung der Löslichkeit für Stickstoff zugesetzt wird, bei der Erstarrung beim Schweißen stark seigern und über die damit einhergehende mikrostrukturelle Inhomogenisierung der Eigenschaften letztlich deren makroskopische Verringerung bewirken.

Die Suche nach für Nitronic 50 geeigneten Zusatzwerkstoffen ergab, dass keine diese Anforderungen erfüllenden Legierungen handelsüblich waren. Dennoch wurden zur Vergewisserung WIG-Schweißversuche ohne Zusatz, mit artgleichem Zusatz und mit einigen ausgewählten Zusatzwerkstoffen (siehe nachfolgende Tabelle) durchgeführt. Dabei war ein geringer positiver Einfluss des Formierens auf der Wurzelseite mit reinem Stickstoff und der Zugabe von bis zu 2 % Stickstoff im Brennergas festzustellen.

Hintergrund dieser Vorgehensweise war der Versuch, dem Abdampfen von Stickstoff aus dem Schweißgut mit einem möglichst hohen Stickstoffpartialdruck entgegenzuwirken.

In der Praxis kann ein derartiges Verfahren mit Mangan nicht realisiert werden. Ergebnis der Untersuchung war unabhängig vom gewählten Zusatz ein merklicher Härteeinbruch im Schweißnahtbereich, der zusammen mit der unterstellten verringerten Kaltverfestigungsneigung, beides zurückzuführen auf lokalen Mangan- und Stickstoffmangel, für das "gesunde" Überleben des Kaltreckens und Vorspannens als äußerst ungünstig eingestuft wurde.

| Bezeichnung | Werkstoff-Nr. | EN ISO 14343-A | AWS A5.9 |
|---|---|---|---|
| Nitronic 50 W | - | | ER 209 |
| Thermanit 19/15 | 1.4455 | W 20 16 3 Mn N L | ER 316LMn (mod.) |
| Böhler AM 400-IG | 1.3954 | WZ 22 17 8 4 N L | - |

Aus den oben dargestellten Gesichtspunkten ergibt sich, dass der ideale Zusatzwerkstoff (Schweißzusatz), was die abdampfenden Elemente Stickstoff und Mangan betrifft, um soviel höher legiert sein muss als der Grundwerkstoff, dass der Verlust beim Schweißen (über)kompensiert wird. Dies trifft auch für das Element Molybdän zu, dessen ungünstige Seigerungsneigung durch eine höhere Konzentration kompensiert werden soll. Beachtet werden muss auch, dass der Stickstoffgehalt nicht so hoch wird, dass beim Schweißen eine Porenbildung aufgrund unzureichender Löslichkeit induziert wird.

Das maximale Lösungsvermögen für Stickstoff kann rechnerisch z.B. gemäß

$$\% \ N = 0,067 \ Cr + 0,02 \ Mn + 0,04 \ Mo - 0,01 \ Ni - 1,0 \ [1)]$$

$$\% \ N = 0.066 \ Cr + 0.02 \ Mn + 0.19 \ C - 0.025 \ Ni + 0.05 Mo - 1.05 \ [2)]$$

als Funktion der Gehalte dafür geeigneter Elemente bzw. des umgekehrt wirkenden Elements Nickel, in Massen-%, ermittelt werden.

Streckgrenze, Zugfestigkeit und Kaltverfestigungsvermögen sollen über den entsprechenden Eigenschaften des Grundwerkstoffs liegen.

Für die Bestimmung der Streckgrenze aus der chemischen Zusammensetzung und der Korngröße D sowie der Dehnung ε können folgende Formeln herangezogen werden.

$$R_{p0,2} = 589 \ \% \ N + 211 \ [MPa] \ [5)]$$

$$R_{p0,2} = 68 + 492 \ N + 354 \ C + 20 \ Si + 14 \ Mo + 26 \ Ti + 18 \ V + 4,4 \ W + 40 \ Nb + 12 \ Al + 7 \ D^{-1/2} \ [MPa] \ [3)]$$

$$R_{p0,2} = 145 \ \sqrt{(1 + 15 \ N)} + (8 + 38 \ N) \ D^{-1/2} + (17 + 10 \ N) \ \varepsilon \ [3)]$$

Die überragende Bedeutung des Elements Stickstoff zu Gunsten der Steigerung der Streckgrenze wird daraus deutlich.

Allerdings muss eine damit einhergehende Beeinträchtigung der Bruchdehnung A berücksichtigt werden:

$$A = \{700 \ MPa - R_{p0,2} \ (\% \ N)\} \ / \ dR_{p0,2}/d\varepsilon \ [4)]$$

Hinweise zur Kaltverfestigungsneigung als Funktion des Stickstoffgehalts können folgender Formel entnommen werden:

$$dR_{p0,2}/d\varepsilon = 10,58 \ \% \ N + 16,92 \ [5)]$$

Auch bei den hier betrachteten Legierungen ist mit einer Tendenz zur Versprödung bei Verringerung der Umgebungstemperatur in den kryogenen Bereich hinein zu rechnen. Die chemische Zusammensetzung ist so zu wählen, dass dieses Risiko minimiert wird. Das Risiko einer Versprödung durch Martensit-Bildung sowie durch das Unterschreiten der Spröd-Duktil-Übergangstemperatur ist zu überprüfen.

Überprüfung der chemischen Zusammensetzung in deren Einfluss auf die Martensit-Starttemperatur $T_{ms}$ gemäß

$$T_{ms} = 1755 - 47\ Cr - 59\ Ni - 54\ Mn - 56\ Mo - 37\ Si - 180\ Ti - 2390\ C - 3720\ N\ [K]\ [3)]$$

Bemerkenswert ist der überragende Einfluss des Elements Stickstoff, der bereits für die Stickstofflöslichkeit als wesentlich erkannten Legierungselemente Cr, Mn und Mo sowie des eingangs als notwendig eingeführten Elements Nickel. Die Martensit-Starttemperatur muss unterhalb der Einsatztemperatur des Liners liegen und sollte zusammen mit dem in der Formel nicht verankerten negativen Einfluss potentieller Verformung so niedrig liegen, dass aus beiden Gründen in Herstellung und bestimmungsgemäßem Betrieb des Liners keine Martensitumwandlung induziert wird.

Die Eignung der chemischen Zusammensetzung muss hinsichtlich der Spröd-Duktil-Übergangstemperatur gemäß

$$T_{DBTT} = 45\ V + 305\ Nb - 19\ Mo + 59\ C + 576\ N_2 + 6\ Cu + 2{,}2\ Ni - 6{,}8\ Mn - 18{,}2\ Cr + 273\ [K]\ [2)]$$

bzw.

$$T_Ü = 5{,}4\ Cr + 3{,}1\ Mo - 8{,}9\ Ni + 192{,}9\ N_2 - 27\ [K]\ [3)]$$

überprüft werden.

Bemerkenswert an diesen Formeln ist, dass der bisher als so positiv eingestufte Stickstoff, im Übermaß zugesetzt, versprödende Wirkung entfaltet. Das Element Nb ist in dieser Hinsicht als ebenfalls kritisch zu bewerten, was aus anderer Erwägung, nämlich der möglichen Bildung von spröden intermetallischen Phasen an den Korngrenzen, in gleicher Weise als gerechtfertigt erscheint. Die Spröd-Duktil-Übergangstemperatur sollte unterhalb der geringsten Einsatztemperatur des Liners liegen. Die Tendenz zur Heißrissbildung beim Schweißen kann am Verhältnis der Chrom- und Nickel-Äquivalente beurteilt werden.

Schließlich muss überprüft werden, welche Mindest-Lösungsglühtemperatur zur Vermeidung einer spröden Sigma-Phase erforderlich ist. Je höher diese Temperatur liegt, ein umso höherer Aufwand ergibt sich und umso größer wird das Risiko eines unkontrollierten Bauteilverzugs durch Kriecheffekte.

Die mindestens erforderliche Lösungsglühtemperatur, um die aus der Legierungswahl folgende Bildung versprödend wirkender Sigma-Phase zu beseitigen, ergibt sich aus

$$T_\sigma = 26.4\ Cr + 6{,}7\ Mn + 50{,}9\ Mo + 92{,}2\ Si - 9{,}2\ Ni - 17{,}9\ Cu - 230{,}4\ C - 238{,}4\ N_2 + 720\ [K]\ [3)]$$

Insbesondere aus Kostengründen, sollte kein neuer, bis dato nicht existierender Schweißzusatz als Fertiglegierung bereitgestellt werden, da die Herstellung neuartiger Legierungen sehr kosten- und zeitaufwendig ist.

Es sollte daher versucht werden, die gewünschte chemische Zusammensetzung des Zusatzwerkstoffs mit Blick auf den zu verschweißenden Grundwerkstoff am Beispiel Nitronic 50 durch Kombinieren unterschiedlicher handelsüblicher Schweißzusätze anzunähern. Im Werkstattversuch hat sich gezeigt, dass man zwei Drähte Schweißzusatz mit einem einzigen Drahtvorschubgerät zuführen kann, allerdings mit identischer Vorschubgeschwindigkeit beider Drähte. Dieser Hinweis legt die Möglichkeit nahe, mit unterschiedlicher Vorschubgeschwindigkeit die aggregierte chemische Zusammensetzung des zugesetzten Werkstoffs und damit die Eigenschaften des Schweißguts variieren zu können. Der Nachteil der Zuführung zweier Schweißdrähte könnte sich derart sogar in einen Vorteil verwandeln lassen.

Es hat sich gezeigt, dass die Kombination der Werkstoffe Austenit P2000 (1.4452, Lieferant Hempel) und SG-NiCr30Mo5W (2.4659) einen für das Beispiel Nitronic 50 geeigneten Schweißzusatz bilden kann. Austenit P2000 ist eine Nickelfreie, hoch Mn- und N-haltige Legierung. Ein handelsüblicher Draht ist mit einem Durchmesser von 1,02 mm verfügbar. 2.4659, eine Nickel-Basis-Legierung ist als Draht mit einem Durchmesser von 1,0 mm verfügbar. Aus dem geringfügig unterschiedlichen Drahtdurchmesser ergibt sich, dass die jeweiligen Elemente im Verhältnis von 51 % (1.4452) und 49 % (2.4659) zugeführt werden.

Das Resultat aus der als ideal angenommenen Mischung beider Drähte ist in der Zeile (Ø) in der nachfolgenden Tabelle dargestellt. Die Massenprozente sind als Mittelwerte der Normwerte angegeben; unterstrichene Werte sind Realwerte. In den letzten 3 Zeilen der Tabelle sind die getesteten, aber als ungenügend verworfenen Zusatzwerkstoffe (Schweißzusätze) verzeichnet.

| Draht | C | Mn | Fe | P | S | Si | Cu | Ni | Co | Cr | Nb+Ta | Mo | V | N |
|---|---|---|---|---|---|---|---|---|---|---|---|---|---|---|
| 1.4452 | 0,075 | 14 <u>12.15</u> | 63,6 | <u>0,011</u> | <u>0,004</u> | 0,88 | - | <u>0,098</u> | | 18 <u>16,71</u> | 0,125 | 3,35 <u>3,22</u> | 0 <u>0,05</u> | 0,87 <u>5 0,87</u> |
| 2.4659 | 0,03 | 1,5 | 15 | ≤0,02 0 | ≤0,01 5 | ≤ 0,80 | 1,7 | 45 *) | | 29,75 | - | 5 | - | - |
| Ø | 0,053 | 7,88 | 39,8 | | | | 0,83 | 22,05 | | 23,76 | 0,06 | 4,16 | 0,025 | 0,45 |
| N 50 Bl. | 0,034 | 4,89 | 58,39 | 0,022 | 0,001 | 0,49 | - | 12,18 | | 21,26 | 0,18 | 2,14 | 0,14 | 0,277 |
| N 50 St. | 0,039 | 5,19 | 58,20 | 0,033 | 0,001 | 0,38 | - | 11,90 | | 21,43 | 0,12 | 2,27 | 0,15 | 0,29 |
| N50W | 0,033 | 5,97 | 60,02 | 0,020 | 0,013 | 0,35 | 0,42 | 9,88 | | 21,21 | - | 1,67 | 0,19 | 0,219 |
| 1.4455 | 0,018 | 7,01 | 53,5 | 0,017 | 0,003 | 0,46 | 0,04 | 15,37 | | 20,59 | - 2,83 | 2,83 | - | 0,156 |
| 1.3954 | 0,013 | 7,31 | 48,36 | 0,013 | 0,006 | 0,63 | 0,05 | 17,74 | | 22,05 | - | 3,61 | - | 0,223 |

Beide Drähte aus 1.4452 und 2.4659 sind kaltgezogen bzw. kaltverfestigt.
*) W = 2,75 %

Zum Vergleich ist in obiger Tabelle die chemische Zusammensetzung des verfügbaren Blechs bzw. Stabstahls aus Nitronic 50 eingetragen. Für den neuen, aus zwei Drähten handelsüblicher Werkstoffe gebildeten Zusatzwerkstoff ist festzustellen, dass der Mn-Gehalt sich im Sinne der besseren Löslichkeit für Stickstoff und der vergrößerten Kaltverfestigungsneigung deutlich verbessert hat, der Ni-Gehalt im Sinne der AustenitStabilität über jeden Zweifel erhaben ist, der Nb-Gehalt sich im Sinne einer Verminderung der Bildung von Sprödphasen und der Heißrissbildung vermittels niedrigschmelzender Eutektika verringert hat, der Mo-Gehalt zur Kompensation der Mo-Seigerung merklich höher liegt und der die Festigkeit und Kaltverfestigungsneigung bestimmende Stickstoff-Gehalt um deutlich mehr als 50 % angehoben wurde.

Dennoch liegt man damit nur bei 64 % der maximalen Stickstofflöslichkeit des gemischten Zusatzes und knapp unterhalb der Stickstofflöslichkeit der verfügbaren Grundwerkstoffe.

Die Sprödbruch-Übergangstemperatur liegt, je nach zugrunde gelegter Berechnungsformel gleichauf oder besser als bei den Grundwerkstoffen.

Die mindestens erforderliche Lösungsglühtemperatur gemäß Berechnungsformel für die Vermeidung von Sigma-Phase liegt etwas oberhalb des Ergebnisses für die Grundwerkstoffe, aber mit 1044 °C noch im akzeptablen Bereich, wie sich aus der nachfolgenden Tabelle ergibt.

| Werkstoff | $T_{DBTT}$[2] | $T_Ü$[3] | $T_\sigma$ | $N_2$ max. | $N_2$ real | Cr-Ä. | Ni-Ä. | Cr/Ni | $T_{ms}$ |
|---|---|---|---|---|---|---|---|---|---|
| | K | K | °C | % | % | % | % | - | K |
| Nitronic 50 Blech | 62 | 40 | 1009 | 0,486 | 0,277 | | | | -1477 |
| Nitronic 50 Rund | 43 | 46 | 1010 | 0,51 | 0,29 | | | | |
| Nitronic 50 W | -24,5 | 47 | 1006 | 0,508 | 0,219 | | | | |
| 1.4455 | -78 | -14 | 1313,5 | 0,48 | 0,156 | | | | |
| 1.3954 | -78 | -11,6 | 1372,7 | 0,59 | 0,223 | | | | |
| 0,51 P2000 + 0,49 NiCr30Mo11 | 2 | -39 | 1157 | 0,75 | 0,45 | | | | |
| 1.3974 (Grundwerkstoff) | 70 | 37 | 1047 | 0,61 | 0,4 | | | | |
| 1.3984 | 32 | -9 | 1078 | 0,68 | 0,35 | | | | |
| 1.4565 (Grundwerkstoff) | 10 | 39 | 1117 | 0,726 | 0,4 | | | | |
| 1.4652 = 654 SMO | 13 | 17 | 1185 | 0,75 | 0,5 | | | | |
| Avesta P54 | -83 | 2 | 1150 | 0,84 | 0,35 | | | | |

(fortgesetzt)

| Werkstoff | $T_{DBTT}$[2] | $T_{Ü}$[3] | $T_\sigma$ | $N_2$ max. | $N_2$ real | Cr-Ä. | Ni-Ä. | Cr/Ni | $T_{ms}$ |
|---|---|---|---|---|---|---|---|---|---|
| 0,51 P2000 + 0,49 SG-NiCr30Mo5W | 43 | 5 | 1044 | 0,7 | 0,45 | | | | -3122 |
| 1.4591 = Alloy 33 *) | -10 | -34 | 982 | 0,966 | Ø0,475 | | | | |

Die vorstehende Tabelle enthält die Eigenschaften des Grundwerkstoffs Nitronic 50 und von getesteten bzw. in Betracht gezogenen Zusatzwerkstoffen (negative Kelvin-Werte ergeben sich rein formal aus der Berechnungsformel und verletzen somit nicht die Physik!).

Beispielhafte Vorgehensweise bei der Fertigung eines Tank-Liners

Nach dem Runden jeweils eines halben Umfangs eines jeden halben Zylinders (die Halbierung des Zylinders ergibt sich aus dem verfügbaren Blechformat) sind die "halben Umfänge" jeweils mit 2 Längsnähten zu halben Zylinderlängen zu verschweißen. Aus dem verfügbaren Blechformat sowie aus der Annahme, dass die Längsnähte einen höheren Widerstand gegen Versagen schon beim Kaltrecken aufweisen (t.b.c.), wenn die Blech-Walzrichtung senkrecht zur Schweißnaht liegt, folgt die Orientierung dieser Walzrichtung in Umfangsrichtung des Zylinders. Die spanabhebend vorbereiteten Dome werden dann jeweils an eine Zylinderhälfte geschweißt. Abschließend folgt das Schließen des Liners mittels Zylinder-Mittelnaht. Die Halbzylinder-Längsnähte sind hierbei so anzuordnen, dass sie von Halbzylinder zu Halbzylinder um 90 ° versetzt sind. Die Schweißfolge ergibt sich aus praktischen Erwägungen und sowohl aus der unterschiedlichen Kritikalität der Schweißnähte unter Berücksichtigung der folgenden fertigungs- und betriebstechnischen Belastungen wie auch aus der erleichterten Zugänglichkeit für visuelle Begutachtung und Röntgen sowie Reparaturen.

Bei größerem verfügbarem Blechformat sowie unter Gesichtspunkten der Kostenminimierung wird man die Zahl der Schweißnähte vermindern wollen. Auch sind beliebige Geometrien des Liners möglich.

Nach dem Röntgen der Schweißnähte wird das Lösungsglühen durchgeführt und der Liner in einem Gesenk kaltgereckt. Danach wird eine zumindest visuelle Begutachtung speziell der Schweißnähte sowie ein Lecktest durchgeführt (im lösungsgeglühten Zustand weist der Linerwerkstoff eine sehr große Duktilität von mindestens 30 % auf und kann bei ca. 14 % Kaltreckgrad als versagensresistent eingestuft werden, wenn man von im Werkstoff vorhandenen Fehlern und Sprödphasen absieht).

Ergebnisse der Schweißversuche

Nach abgeschlossenen Vorversuchen mit als ungeeignet eingestuftem WIG-Schweißzusatz, nach Festlegung der $N_2$-Formierung auf der Wurzelseite sowie der Zugabe von geringen Anteilen an $N_2$ ins Brennergas beim WIG-Schweißen wurden einige WIG-SchweißVersuche mit dem erfindungsgemäßen Mischschweißzusatz sowie EB-Schweißversuche durchgeführt. Der Grundwerkstoff (Blech) wurde zum Teil vor dem Schweißen lösungsgeglüht, die geschweißten Proben wurden zum Teil lösungsgeglüht. Alle Proben wurden abschließend bei 400 °C / 2h ausgelagert.

Allgemein lässt sich sagen, dass die EB-Proben in der Schweißnaht bzw. in der Fusionslinie brachen, während einige WIG-Proben im Grundwerkstoff versagten. Die Mittelwerte der Gleichmaßdehnung bei Raumtemperatur waren bei den EB-Proben durchgängig im mittleren bis hohen einstelligen Bereich, während die der WIG-Proben oberhalb von 11 % lagen. Durch Lösungsglühen bei 1120 °C / 10' nach dem Schweißen kann die Gleichmaßdehnung bei WIG-Proben um mindestens 1/3 angehoben werden, unabhängig davon, ob das Blech vor dem Schweißen im Lieferzustand oder lösungsgeglüht vorlag. Bei EB-Proben scheint (die Zahl der Versuche ist gering) ein Lösungsglühen vor dem Schweißen hinsichtlich der Gleichmaßdehnung von Vorteil zu sein. Lösungsglühen nach dem Schweißen ist bei EB-Proben noch wichtiger als bei WIG-Proben, um die Gleichmaßdehnung aus etwas über 5 % herauszuheben.

Die plastische Verformung der Schweißnähte, ermittelt aus ihrer Querschnittsverminderung, bei einer simulierten Kaltreckung des Liners, d.h. bei einer zügigen Reckung um 14 %, war bei den nach dem Schweißen nicht lösungsgeglühten Proben durchgängig merklich größer als im Grundwerkstoff. Bei nach dem Schweißen von lösungsgeglühten Proben hingegen war die Querschnittsverminderung der Schweißnaht gleich oder geringer als im Grundwerkstoff. Daraus sowie aus den kongruenten Werten der Gleichmaßdehnung folgt eine größere Robustheit lösungsgeglühter Schweißnähte gegen das Kaltrecken, das Vorspannen und den zyklischen Betrieb.

Metallographisch wurde bei allen Proben, die nach dem Schweißen nicht oder nur bei 900 °C / 30' lösungsgeglüht wurden, Delta-Ferrit im Bereich der Fusionslinie bzw. in der Schweißnaht mit semikontinuierlicher Ausprägung festgestellt. Es wird angenommen, dass dies - neben den deutlich geringeren Gleichmaßdehnungswerten - dazu führen kann, dass die Schweißnähte in tiefkalter Umgebung bzw. unter Hochdruck-Wasserstoff unter zyklischer Applikation dieser Bedingungen zum Versagen neigen werden.

Bemerkenswert im Hinblick auf den gewünschten hohen elastischen Bereich ε nach Hooke (ε = $R_{p0,2}$ / E) ist, dass die nach dem Schweißen lösungsgeglühten Proben unabhängig vom Schweißverfahren mehr oder weniger genau 0,43 % erreichen, während die nicht lösungsgeglühten Proben sogar 0,48 % zeigen. WIGgeschweißte Proben (allerdings wenige), deren Grundwerkstoff vor dem Schweißen lösungsgeglüht wurde, weisen nach dem Schweißen und Lösungsglühen lediglich 0,37 % auf. Bei EBgeschweißten Proben war ein derartiger Einfluss nicht erkennbar.

Die soeben erwähnten WIG-Proben, deren Grundwerkstoff vor dem Schweißen (mit 2 % $N_2$ im Brennergas) lösungsgeglüht wurde, zeigten im Zugversuch Versagen im Grundwerkstoff. Daneben konnte dieses Ergebnis nur noch mit WIG-Proben erzielt werden, die im Lieferzustand des Blechs mit 1 % $N_2$ im Brennergas geschweißt wurden. Ob der Unterschied in der chemischen Zusammensetzung des Brennergases begründet liegt, kann mangels reproduzierter Ergebnisse nicht abschließend beurteilt werden.

Im Folgenden ist eine Zusammenfassung der Schweißnahteigenschaften an Nitronic 50 mit dem Spezialzusatz (P2000 + 2.4659) wiedergegeben:

Ergebnisse nach WIG-Schweißen (wenn zutreffend), Lösungsglühen (1120 °C, 10'), Kaltrecken (14 %) und Auslagern (400 °C, 2h): Durchschnittswerte an Luft, wenn nicht anders angegeben

| Test-Bedingungen | T | $R_{p0,2}$ | $R_m$ | $A_g$ | A | Bruchlage | n |
|---|---|---|---|---|---|---|---|
| | °C | MPa | MPa | % | % | | |
| Grundwerkstoff | 100 | - | 777 | - | 32,5 | - | 2 |
| Probe quer zur Naht | 100 | - | 730 | - | 28,5 | FL, GW | 2 |
| Grundwerkstoff | 20 | 838 | 960 | 17,3 | 28,9 | - | 2 |
| Probe quer zur Naht | 20 | 802 | 914 | 15,0 | 19,2 | FL, GW | 3 |
| Grundwerkstoff, 100 bar Ar | -50 | | | | 49 | - | 2 |
| Probe quer zur Naht, 100 bar Ar | -50 | | | | 28,9 | FL | 1 |
| Grundwerkstoff, 100 bar $H_2$ | -50 | | | | 47,6 | - | 2 |
| Probe quer zur Naht, 100 bar $H_2$ | -50 | | | | 26,0 | FL | 1 |
| Probe quer zur Naht | - 196 | 1480 | 1724 | 10,7 | 12,2 | FL, GW | 3 |
| Grundwerkstoff, in $H_2$ | - 253 | 1740 | 2071 | - | 25,3 | - | 2 |
| Probe quer zur Naht, in $H_2$ | - 253 | 1702 | 2022 | - | 20,3 | | 3 |

n     Zahl der Proben
FL    Fusionslinie
GW   Grundwerkstoff

Daraus geht hervor, dass durch die Zuführung des geeigneten Schweißzusatzes sowie das nachfolgende Lösungsglühen es durchgängig gelungen ist, den Härteeinbruch in der Schweißnaht und mithin ein frühes Versagen der Zugprobe in der Schweißnaht zu vermeiden. Nach Recken bei Raumtemperatur sowie Auslagern bei 400 °C ergibt sich im Zugversuch eine Bruchlage, die niemals die Schweißnaht selbst betrifft, sondern den Grundwerkstoff oder die Fusionslinie. Letztere ist als verbleibende Schwachstelle anzusehen, bedingt sowohl durch die Kerbwirkung des Querschnitt-Übergangs vom Grundwerkstoff in den Nahtquerschnitt wie auch durch die Wärmebeeinflussung des Schweißprozesses, der zu einer Kornvergröberung in der Wärmeeinflusszone führt.

Diese Schwachstelle ist allerdings sehr relativiert, da sich die mechanischen Kennwerte bei Zugproben, die in der Fusionslinie versagt haben, kaum oder gar nicht von denen unterscheiden, die im Grundwerkstoff brachen.

Der Abfall der Dehnungswerte im geschweißten Zustand im Vergleich zu denen des Grundwerkstoffs ist üblich und der durch vergrößerten Querschnitt behinderten Dehnung im Schweißnahtbereich zuzuordnen.

Bemerkenswert ist der geringfügige, ja fast vernachlässigbare Abfall der Bruchdehnung unter 100 bar $H_2$ im Vergleich zum gleichen Versuch unter Argon. In Zusammenschau mit den Versuchsergebnissen bei tiefer und kryogener Temperatur folgt, dass weder eine Wasserstoff- noch eine Tieftemperaturversprödung befürchtet werden muss.

Die Ergebnisse zeigen, dass das gewünschte Streckgrenzenniveau mit entsprechendem Kaltreckgrad erreicht werden kann und dabei Bruchdehnungswerte resultieren, die mehr als ausreichend für den gewünschten Einsatzfall eines vorzuspannenden Hochdrucktanks mit erheblicher betriebsbedingter zyklischer Druck- und Temperaturbelastung sind (hier wären Bruchdehnungswerte bis zum mittleren einstelligen %-Bereich zufriedenstellend).

Es ist zu verstehen, dass die hier dargestellten theoretischen Grundlagen und praktischen Ergebnisse Gültigkeit unabhängig vom applizierten Schweißverfahren beanspruchen und Hinweise für die Definition geeigneter Grund- und Zusatzwerkstoffe für den aktuellen Einsatzfall, aber auch für ähnlich gelagerte Anwendungen geben.

Referenzen

1) M.O. Speidel, Nitrogen Containing Austenitic Stainless Steels, Mat.-Wiss. u. Werkstofftech. 37 (2006) 875
2) P. Cobelli, Development of Ultrahigh Strength Austenitic Stainless Steels Alloyed with Nitrogen, Diss. ETH Zürich 2003
3) A.A. Rechsteiner, Metallkundliche und metallurgische Grundlagen zur Entwicklung stickstoffreicher, zäher, hochfester austenitischer Stähle, Diss. ETH Zürich, 1994
4) C. Rennhard, P. Uggowitzer, M.O. Speidel, Eigenschaften pulvermetallurgischer und aus der Gasphase aufgestickter Stähle, in: M.O. Speidel, P.J. Uggowitzer, (Hg.), Stickstofflegierte Stähle, Verlag Thubal-Kain, Zürich 1991
5) R. Lagneborg, Steel development, review and prospects for the future, Scand. J. Metallurgy 26 (1997) 255

## Patentansprüche

1. Verfahren zum Schweißen eines Grundwerkstoffs aus einem vollaustenitischen, Stickstoff-legierten Chrom-Nickel-Stahl unter Verwendung eines Schweißzusatzes, **dadurch gekennzeichnet, dass** der Grundwerkstoff UNS S20910 ist und der Schweißzusatz eine Kombination aus 51% 1.4452 und 49% 2.4659 in Massenprozent.

2. Verfahren nach Anspruch 1, **dadurch gekennzeichnet, dass** die Schweißzusätze in Form von zwei Drähten mit einem einzigen Drahtvorschubgerät zugeführt werden.

3. Verfahren nach Anspruch 2, **dadurch gekennzeichnet, dass** die zwei Drähte mit unterschiedlicher Vorschubgeschwindigkeit zugeführt werden.

4. Verfahren nach einem der Ansprüche 1 bis 3, **dadurch gekennzeichnet, dass** als Schweißverfahren das WIG-Schweißen, EB-Schweißen, Reibschweißen, Lichtbogenschweißverfahren oder Laserschweißen angewendet wird.

5. Verfahren nach Anspruch 4, **dadurch gekennzeichnet, dass** dem Brennergas zusätzlich 1 bis 2 % Stickstoff zugesetzt werden, um dem Abdampfen von Stickstoff mit einem hohen Stickstoffpartialdruck weiter entgegenzuwirken.

6. Verfahren nach Anspruch 4, **dadurch gekennzeichnet, dass** auf der Wurzelseite mit reinem Stickstoff formiert wird, um dem Abdampfen von Stickstoff mit einem hohen Stickstoffpartialdruck weiter entgegenzuwirken.

7. Verwendung des Verfahrens nach einem der Ansprüche 1 bis 6 zur Herstellung von zur Speicherung von Hochdruck-Flüssigwasserstoff geeigneten Tanks bzw. Behältern.

## Claims

1. Method for welding a base material made of fully austenitic, nitrogen-alloyed chromium-nickel steel using a welding filler, **characterised in that** the base material is UNS S20910 and the welding filler is a combination of 51% 1.4452 and 49% 2.4659 in weight percent.

2. Method according to claim 1, **characterised in that** the welding fillers are fed in the form of two wires with a single wire feeder.

3. Method according to claim 2, **characterised in that** the two wires are fed at different feed rates.

4. Method according to one of the claims 1 to 3, **characterised in that** GTA welding, EB welding, friction welding, arc welding methods or laser welding is used as the welding method.

**5.** Method according to claim 4, **characterised in that** 1 to 2% nitrogen are added to the burner gas to further counteract the evaporation of nitrogen with a high nitrogen partial pressure.

**6.** Method according to claim 4, **characterised in that** pure nitrogen is used on the root side to further counteract the evaporation of nitrogen with a high nitrogen partial pressure .

**7.** Use of the method according to one of the claims 1 to 6 for the production of tanks or containers, respectively, suitable for the storing of high-pressure liquid hydrogen.

**Revendications**

**1.** Procédé pour souder un matériau de base en acier chrome-nickel entièrement austénitique et allié à l'azote, en utilisant un apport de soudage, **caractérisé en ce que** le matériau de base est du UNS S20910 et l'apport de soudage est une combinaison de 51% de 1.4452 et de 49% de 2.4659 en pourcentage in poids.

**2.** Procédé selon la revendication 1, **caractérisé en ce que** les apports de soudage sont alimentés sous forme de deux fils avec un unique appareil d'avance de fil.

**3.** Procédé selon la revendication 2, **caractérisé en ce que** les deux fils sont alimentés avec des vitesses d'avance différentes.

**4.** Procédé selon l'une des revendications 1 à 3, **caractérisé en ce que** l'on applique à titre de procédure de soudure, la soudure WIG, la soudure EB, la soudure par friction, la soudure à l'arc ou la soudure au laser.

**5.** Procédé selon la revendication 4, **caractérisé en ce que** l'on ajoute au gaz de combustion 1 à 2 % d'azote, afin de s'opposer à la vaporisation d'azote avec une forte pression partielle d'azote.

**6.** Procédé selon la revendication 4, **caractérisé en ce que** l'on procède à une mise en forme avec de l'azote pur sur le côté de l'amorce, afin de s'opposer à la vaporisation d'azote avec une forte pression partielle d'azote.

**7.** Utilisation du procédé selon l'une des revendications 1 à 6 pour la production de réservoirs ou de récipients convenables pour le stockage d'hydrogène liquide sous haute pression.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3854938 A

**In der Beschreibung aufgeführte Nicht-Patentliteratur**

- **GAVRILJUK et al.** High Nitrogen Steels, Structure, Properties, Manufacture, Applications. Springer, 01. Januar 1999, 225-226
- **M.O. SPEIDEL.** Nitrogen Containing Austenitic Stainless Steels. *Mat.-Wiss. u. Werkstofftech.,* 2006, vol. 37, 875
- **P. COBELLI.** Development of Ultrahigh Strength Austenitic Stainless Steels Alloyed with Nitrogen. *Diss.,* 2003
- **A.A. RECHSTEINER.** Metallkundliche und metallurgische Grundlagen zur Entwicklung stickstoffreicher, zäher, hochfester austenitischer Stähle. *Diss.,* 1994
- Eigenschaften pulvermetallurgischer und aus der Gasphase aufgestickter Stähle. **C. RENNHARD ; P. UGGOWITZER ; M.O. SPEIDEL.** Stickstofflegierte Stähle. Verlag Thubal-Kain, 1991
- **R. LAGNEBORG.** Steel development, review and prospects for the future. *Scand. J. Metallurgy,* 1997, vol. 26, 255